# EUROPEAN PATENT APPLICATION

(11) **EP 3 410 563 A1**
(43) Date of publication of application: **05.12.2018**
(21) Application number: 16888321.3
(22) Date of filing: 21.12.2016
(51) Int. Cl.: H02J 50/12, H02J 7/02, H02J 5/00

(54) **WIRELESS POWER SUPPLY METHOD AND APPARATUS THEREFOR**

(30) Priority: 27.01.2016 KR 20160009890
(71) Applicant: LG Innotek Co., Ltd., Seoul 04637 (KR)
(72) Inventor: BAE, Su Ho, Seoul 04637 (KR)
(74) Representative: DREISS Patentanwälte PartG mbB
(86) International application number: PCT/KR2016/014973
(87) International publication number: WO 2017/131345

(57) **Abstract**

The present invention relates to a wireless power supply apparatus comprising: n transmission coil(s) for transmitting a magnetic field; a frequency generation unit for supplying an AC signal having a predetermined operation frequency; n inverter buffer(s) for a transition of the phase of the AC signal, a master control unit for activating or inactivating the inverter buffer(s); n+1 amplifier(s) for amplifying the AC signal; and n+1 gate driver(s) for controlling the amplifier(s) on the basis of the phase of the inputted AC signal.

## Description

### [Technical Field]

Embodiments relate to charging technology, and more particularly, to a wireless power transmission method for reducing cost, simplifying a structure and maximizing power efficiency, and an apparatus therefor.

### [Background Art]

Recently, with rapid development of information and communication technology, a ubiquitous society based on information and communication technology is being established.

In order for information communication devices to be connected anywhere and anytime, sensors with a built-in computer chip having a communication function should be installed in all facilities throughout society. Accordingly, power supply to these devices or sensors is becoming a new challenge. In addition, as the types of mobile devices such as Bluetooth handsets and iPods, as well as mobile phones, rapidly increase in number, charging the battery has required time and effort. As a way to address this issue, wireless power transmission technology has recently drawn attention.

Wireless power transmission (or wireless energy transfer) is a technology for wirelessly transmitting electric energy from a transmitter to a receiver using the induction principle of a magnetic field. In the 1800s, an electric motor or a transformer based on the electromagnetic induction principle began to be used. Thereafter, a method of transmitting electric energy by radiating an electromagnetic wave such as a radio wave or a laser was tried. Electric toothbrushes and some wireless shavers are charged through electromagnetic induction.

Wireless energy transmission schemes known up to now may be broadly classified into electromagnetic induction, electromagnetic resonance, and RF transmission using a short-wavelength radio frequency.

In the electromagnetic induction scheme, when two coils are arranged adjacent to each other and current is applied to one of the coils, a magnetic flux generated at this time generates electromotive force in the other coil. This technology is being rapidly commercialized mainly for small devices such as mobile phones. In the electromagnetic induction scheme, power of up to several hundred kilowatts (kW) may be transmitted with high efficiency, but the maximum transmission distance is less than or equal to 1 cm. As a result, the device should be generally arranged adjacent to the charger or the floor.

The electromagnetic resonance scheme uses an electric field or a magnetic field instead of using an electromagnetic wave or current. The electromagnetic resonance scheme is advantageous in that the scheme is safe to other electronic devices or the human body since it is hardly influenced by the electromagnetic wave. However, this scheme may be used only at a limited distance and in a limited space, and has somewhat low energy transfer efficiency.

The short-wavelength wireless power transmission scheme (simply, RF transmission scheme) takes advantage of the fact that energy can be transmitted and received directly in the form of radio waves. This technology is an RF power transmission scheme using a rectenna. A rectenna, which is a compound of antenna and rectifier, refers to a device that converts RF power directly into direct current (DC) power. That is, the RF method is a technology for converting AC radio waves into DC waves. Recently, with improvement in efficiency, commercialization of RF technology has been actively researched.

The wireless power transmission technology is applicable to various industries including IT, railroads, and home appliance industries as well as the mobile industry.

However, conventionally, power transmission has used a plurality of independent amplifiers switching between a plurality of transmission coils, which causes increase in the number of devices, resulting in increase in cost and the size of the transmission circuit.

In addition, power can be transmitted selectively using a transmission coil through direct switching by a control unit without a plurality of amplifiers provided. This method causes a large loss of power due to loss of applied power caused by the switch.

### [Disclosure]

### [Technical Problem]

Therefore, the present disclosure has been made in view of the above problems, and embodiments provide a wireless power transmission control method and an apparatus therefor.

Embodiments relate to a wireless power transmission method capable of reducing costs and simplifying a structure in a wireless power transmission apparatus having a plurality of transmission coils, and an apparatus therefor.

Embodiments relate to a wireless power transmission method capable of maximizing power efficiency in a wireless power transmission apparatus having a plurality of transmission coils, and an apparatus therefor.

### [Technical Solution]

Embodiments provide a wireless power transmission method and an apparatus therefor.

According to an aspect of the present disclosure, there is provided a wireless power supply apparatus including n transmission coils for transmission of a magnetic field, a frequency generator configured to supply an AC signal having a predetermined operating frequency, n inverter buffers configured to shift a phase of the AC signal, a main controller configured to enable or disable the inverter buffers, n+1 amplification units configured to amplify the AC signal, and n+1 gate drivers configured to control the amplification units based on the phase of the AC signal input thereto.

In an embodiment, the amplification units may include at least one metal oxide semiconductor field effect transistor (MOSFET).

In an embodiment, a current flowing across the transmission coils may be inverted with a periodicity of T/2 period when a periodicity of the AC signal is T.

In an embodiment, one end of each of the gate drivers may be electrically connected to the inverter buffers, and the other end of each of the gate drivers may be electrically connected to the amplification units.

In an embodiment, n-2 amplification units among the n amplification units may be electrically connected to the two or more of the transmission coils different from each other.

In an embodiment, two of the n amplification units may be electrically connected to only one of the transmission coils.

According to another aspect of the present disclosure, there is provided a wireless power supply apparatus including a plurality of transmission coils for transmission of a magnetic field, a frequency generator configured to supply an AC signal having a predetermined operating frequency, a plurality of inverter buffers configured to shift a phase of the AC signal, a main controller configured to enable or disable the inverter buffers, a plurality of amplification units configured to amplify the AC signal, and a plurality of gate drivers configured to control the amplification units based on the phase of the AC signal input thereto, wherein at least one of the amplification units is electrically connected to the plurality of transmission coils.

In an embodiment, the transmission coils may include first and second transmission coils, wherein the amplification units may include first to third amplification units, wherein one end of the first transmission coil and one end of the second transmission coil may be electrically connected to the second current amplification unit.

In an embodiment, one end of the first transmission coil may be electrically connected to the first current amplification unit and the other end of the first transmission coil may be electrically connected to the second current amplification unit, wherein one end of the second transmission coil may be electrically connected to the second current amplification unit and the other end of the second transmission coil may be electrically connected to the third current amplification unit.

In an embodiment, the amplification units may include at least one metal oxide semiconductor field effect transistor (MOSFET).

In an embodiment, the number of the gate drivers may be equal to the number of the current amplification units.

In an embodiment, the gate drivers may include first to third gate drivers, wherein one end of the first gate driver may be electrically connected to the first inverter buffer and the other end of the first gate driver may be electrically connected to the first current amplification unit, wherein one end of the second gate driver may be electrically connected to a current supply and the other end of the second gate driver is electrically connected to the second current amplification unit, wherein one end of the third gate driver may be electrically connected to the second inverter buffer and the other end of the third gate driver may be electrically connected to the third current amplification unit.

According to another aspect of the present disclosure, there is provided a wireless power supply apparatus including first to third transmission coils for transmission of a magnetic field, a frequency generator configured to supply an AC signal having a predetermined operating frequency, first to third inverter buffers configured to shift a phase of the AC signal, a main controller configured to enable or disable the inverter buffers, first to fourth amplification units configured to amplify the AC signal, and first to fourth gate drivers configured to control the amplification units based on the phase of the AC signal input thereto, wherein at least one of the amplification units is electrically connected to the transmission coils.

In an embodiment, one end of the n-th transmission coil may be electrically connected to the n-th amplification unit, wherein the other end of the n-th transmission coil may be electrically connected to the (n+1)-th amplification unit.

In an embodiment, the n-th amplification unit may be electrically connected to the n-th gate driver, wherein one end of the n-th inverter buffer may be electrically connected to the n-th gate driver, wherein the other end of the n-th inverter buffer may be electrically connected to the (n+1)-th gate driver.

The above-described aspects of the present disclosure are merely a part of preferred embodiments of the present disclosure. Those skilled in the art will derive and understand various embodiments reflecting the technical features of the present disclosure from the following detailed description of the present disclosure.

### [Advantageous Effects]

The method and apparatus according to the embodiments have the following effects.

The present disclosure has been made in view of the above problems, and embodiments may provide a wireless power transmission control method and an apparatus therefor.

Embodiments may provide a wireless power transmission method capable of reducing costs and simplifying a structure in a wireless power transmission apparatus having a plurality of transmission coils, and an apparatus therefor.

Embodiments may provide a wireless power transmission method capable of maximizing power efficiency in a wireless power transmission apparatus having a plurality of transmission coils, and an apparatus therefor.

It will be appreciated by those skilled in the art that that the effects that can be achieved through the embodiments of the present disclosure are not limited to those described above and other advantages of the present disclosure will be more clearly understood from the following detailed description.

### [Description of Drawings]

The accompanying drawings, which are included to provide a further understanding of the disclosure and are incorporated in and constitute a part of this application, illustrate embodiments of the disclosure and, together with the description, serve to explain the principles of the disclosure. It is to be understood, however, that the technical features of the present disclosure are not limited to the specific drawings, and the features disclosed in the drawings may be combined to constitute a new embodiment.
FIG. 1 is a block diagram illustrating the structure of a wireless power transmission system according to an embodiment of the present disclosure.
FIG. 2 is a diagram illustrating a type and characteristics of a wireless power transmitter according to an embodiment of the present disclosure.
FIG. 3 is a diagram illustrating a type and characteristics of a wireless power receiver according to an embodiment of the present disclosure.
FIG. 4 shows equivalent circuit diagrams of a wireless power transmission system according to an embodiment of the present disclosure.
FIG. 5 is a state transition diagram illustrating a state transition procedure of a wireless power transmitter according to an embodiment of the present disclosure.
FIG. 6 is a state transition diagram illustrating a wireless power receiver according to an embodiment of the present disclosure.
FIG. 7 illustrates operation regions of a wireless power receiver according to V_{RECT} according to an embodiment of the present disclosure.
FIG. 8 is a configuration diagram of a wireless power transmission system according to an embodiment of the present disclosure.
FIG. 9 is a flowchart illustrating a wireless charging procedure according to an embodiment of the present disclosure.
FIG. 10 is a block diagram of a wireless power transmitter according to an embodiment of the present disclosure.
FIG. 11 is a circuit diagram of a wireless power transmitter according to an embodiment of the present disclosure.
FIG. 12 is a circuit diagram of a wireless power transmitter according to another embodiment of the present disclosure.
FIG. 13 is a circuit diagram of a wireless power transmitter according to yet another embodiment of the present disclosure.
FIGs. 14A and 14B illustrate operation of a transmission resonator coil according to control by a main controller.

### [Best Mode]

A wireless power supply apparatus according to an embodiment of the present disclosure may include N transmission coils for transmission of a magnetic field, a frequency generator configured to supply an AC signal having a predetermined operating frequency, n inverter buffers configured to shift a phase of the AC signal, a main controller configured to enable or disable the inverter buffers, n+1 amplification units configured to amplify the AC signal, and n+1 gate drivers configured to control the amplification units based on the phase of the AC signal input thereto.

### [Mode for Invention]

Hereinafter, an apparatus and various methods to which embodiments of the present disclosure are applied will be described in detail with reference to the drawings. As used herein, the suffixes "module" and "unit" are added or used interchangeably to facilitate preparation of this specification and are not intended to suggest distinct meanings or functions.

While all elements constituting embodiments of the present disclosure are described as being connected into one body or operating in connection with each other, the disclosure is not limited to the described embodiments. That is, within the scope of the present disclosure, one or more of the elements may be selectively connected to operate. In addition, although all elements can be implemented as one independent hardware device, some or all of the elements may be selectively combined to implement a computer program having a program module for executing a part or all of the functions combined in one or more hardware devices. Code and code segments that constitute the computer program can be easily inferred by those skilled in the art. The computer program may be stored in a computer-readable storage medium, read and executed by a computer to implement an embodiment of the present disclosure. The storage medium of the computer program may include a magnetic recording medium, an optical recording medium, and a carrier wave medium.

The terms "include," "comprise" and "have" should be understood as not precluding the possibility of existence or addition of one or more other components unless otherwise stated. All terms, including technical and scientific terms, have the same meaning as commonly understood by one of ordinary skill in the art to which this disclosure pertains, unless otherwise defined. Commonly used terms, such as those defined in typical dictionaries, should be interpreted as being consistent with the contextual meaning of the relevant art, and are not to be construed in an ideal or overly formal sense unless expressly defined to the contrary.

In describing the components of the present disclosure, terms such as first, second, A, B, (a), and (b) may be used. These terms are used only for the purpose of distinguishing one constituent from another, and the terms do not limit the nature, order or sequence of the components. When one component is said to be "connected," "coupled" or "linked" to another, it should be understood that this means the one component may be directly connected or linked to another one or another component may be interposed between the components.

In the description of the embodiments, "wireless power transmitter," "wireless power transmission device," "transmission terminal," "transmitter," "transmission device," "transmission side," and the like will be interchangeably used to refer to a device for transmitting wireless power in a wireless power system, for simplicity. In addition, "wireless power reception device," "wireless power receiver," "reception terminal," "reception side," "reception device," "receiver," and the like will be interchangeably used to refer to a device for receiving wireless power from a wireless power transmission device, for simplicity.

The wireless power transmitter according to the present disclosure may be configured as a pad type, a cradle type, an access point (AP) type, a small base station type, a stand type, a ceiling embedded type, a wall-mounted type, or the like. One transmitter may transmit power to a plurality of wireless power reception apparatuses. To this end, the wireless power transmitter may include at least one wireless power transmission means. Here, the wireless power transmission means according to the electromagnetic induction scheme may employ various wireless power transmission standards which are based on the electromagnetic induction scheme for charging according to the electromagnetic induction principle meaning that a magnetic field is generated in a power transmission terminal coil and current is induced in a reception terminal coil by the magnetic field. Here, the wireless power transmission means may include wireless charging technology using the electromagnetic induction schemes defined by the Wireless Power Consortium (WPC) and the Power Matters Alliance (PMA), which are wireless charging technology standard organizations.

A wireless power transmitter according to another embodiment of the present disclosure may employ various wireless power transmission standards which are based on the electromagnetic resonance scheme. For example, the electromagnetic power transmission standard in the electromagnetic resonance scheme may include wireless charging technology of the resonance scheme defined in A4WP (Alliance for Wireless Power).

A wireless power transmitter according to another embodiment of the present disclosure may support both the electromagnetic induction scheme and the electromagnetic resonance scheme.

In particular, the wireless integrated charger or wireless power transmission control apparatus according to an embodiment of the present disclosure may not only support at least one wireless power transmission scheme of the electromagnetic induction scheme and the electromagnetic resonance scheme, but also supply electric power to an electronic device through at least one charging terminal provided on one side of the charger.

In addition, a wireless power receiver according to an embodiment of the present disclosure may include at least one wireless power reception means, and may receive wireless power from two or more transmitters simultaneously. Here, the wireless power reception means may include wireless charging technologies of the electromagnetic induction schemes defined by the Wireless Power Consortium (WPC) and the Power Matters Alliance (PMA), which are wireless charging technology standard organizations, and the electromagnetic induction scheme defined by A4WP (Alliance for Wireless Power) .

An electronic device capable of receiving power from a wireless integrated charger according to an embodiment of the present disclosure may be employed in small electronic devices including a mobile phone, a smartphone, a laptop, a digital broadcasting terminal, a PDA (Personal Digital Assistant), a PMP (Portable Multimedia Player), a navigation device, an electric toothbrush, an electronic tag, a lighting device, a remote control, a fishing float, and wearable devices such as a smart watch. However, the embodiments are not limited thereto. The applications may include any devices which are capable of charging the battery by receiving power through a wireless power transmission scheme embedded in a wireless integrated charger or a wireless power transmission control apparatus and a wired connection terminal for charging.

In the following description, a charger provided with both a wired charging means and a wireless charging means to implement wireless integrated power supply is referred to as a wireless integrated charger or a wireless power transfer control apparatus.

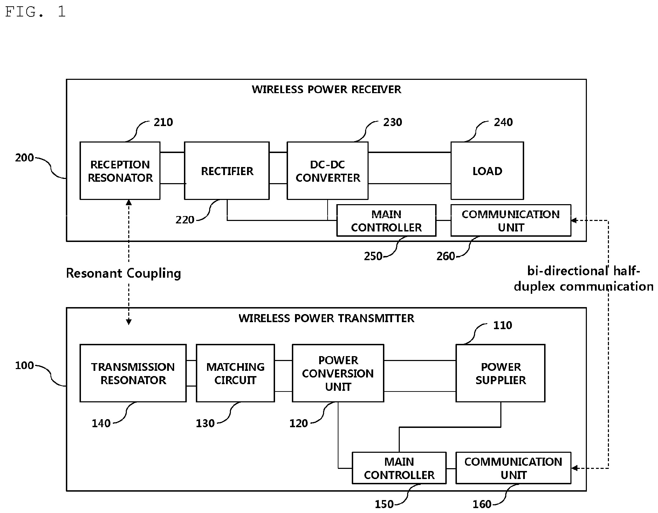

FIG. 1 is a block diagram illustrating the structure of a wireless power transmission system according to an embodiment of the present disclosure.

Referring to FIG. 1, a wireless power transmission system may include a wireless power transmitter 100 and a wireless power receiver 200.

While FIG. 1 illustrates that the wireless power transmitter 100 transmits wireless power to one wireless power receiver 200, this is merely one embodiment, and the wireless power transmitter 100 according to another embodiment of the present disclosure may transmit wireless power to a plurality of wireless power receivers 200. It should be noted that the wireless power receiver 200 according to yet another embodiment may simultaneously receive wireless power from a plurality of wireless power transmitters 100.

The wireless power transmitter 100 may generate a magnetic field using a specific power transmission frequency to transmit power to the wireless power receiver 200.

The wireless power receiver 200 may receive power by tuning to the same frequency as the frequency used by the wireless power transmitter 100.

As an example, the frequency for power transmission may be, but is not limited to, a 6.78 MHz band.

That is, the power transmitted by the wireless power transmitter 100 may be delivered to the wireless power receiver 200 that is in resonance with the wireless power transmitter 100.

The maximum number of wireless power receivers 200 capable of receiving power from one wireless power transmitter 100 may be determined based on the maximum transmit power level of the wireless power transmitter 100, the maximum power reception level of the wireless power receiver 200, and the physical structures of the wireless power transmitter 100 and the wireless power receiver 200.

The wireless power transmitter 100 and the wireless power receiver 200 can perform bidirectional communication in a frequency band different from the frequency band for wireless power transmission, i.e., the resonant frequency band. As an example, bidirectional communication may employ a half-duplex Bluetooth low energy (BLE) communication protocol.

The wireless power transmitter 100 and the wireless power receiver 200 may exchange characteristics and state information with each other, namely, power negotiation information via bidirectional communication.

As an example, the wireless power receiver 200 may transmit predetermined power reception state information for controlling the level of power received from the wireless power transmitter 100 to the wireless power transmitter 100 via bidirectional communication. The wireless power transmitter 100 may dynamically control the transmit power level based on the received power reception state information. Thereby, the wireless power transmitter 100 may not only optimize the power transmission efficiency, but also provide a function of preventing load breakage due to overvoltage, a function of preventing power from being wasted due to under-voltage, and the like.

The wireless power transmitter 100 may also perform functions such as authenticating and identifying the wireless power receiver 200 through bidirectional communication, identifying incompatible devices or non-rechargeable objects, identifying a valid load, and the like.

Hereinafter, a wireless power transmission process according to the resonance scheme will be described in more detail with reference to FIG. 1.

The wireless power transmitter 100 may include a power supplier 110, a power conversion unit 120, a matching circuit 130, a transmission resonator 140, a main controller 150, and a communication unit 160. The communication unit may include a data transmitter and a data receiver.

The power supplier 110 may supply a specific supply voltage to the power conversion unit 120 under control of the main controller 150. The supply voltage may be a DC voltage or an AC voltage.

The power conversion unit 120 may convert the voltage received from the power supplier 110 into a specific voltage under control of the main controller 150. To this end, the power conversion unit 120 may include at least one of a DC/DC converter, an AC/DC converter, or a power amplifier.

The matching circuit 130 is a circuit that matches impedances between the power conversion unit 120 and the transmission resonator 140 to maximize power transmission efficiency.

The transmission resonator 140 may wirelessly transmit power using a specific resonant frequency according to the voltage applied by the matching circuit 130.

The wireless power receiver 200 may include a reception resonator 210, a rectifier 220, a DC-DC converter 230, a load 240, a main controller 250 and a communication unit 260. The communication unit may include a data transmitter and a data receiver.

The reception resonator 210 may receive power transmitted by the transmission resonator 140 through the resonance effect.

The rectifier 210 may function to convert the AC voltage supplied from the reception resonator 210 into a DC voltage.

The DC-DC converter 230 may convert the rectified DC voltage into a specific DC voltage required by the load 240.

The main controller 250 may control the operation of the rectifier 220 and the DC-DC converter 230 or generate the characteristics and state information on the wireless power receiver 200 and may control the communication unit 260 to transmit the characteristics and state information on the wireless power receiver 200 to the wireless power transmitter 100. For example, the main controller 250 may monitor the intensities of the output voltage and current from the rectifier 220 and the DC-DC converter 230 to control the operation of the rectifier 220 and the DC-DC converter 230.

The intensity information on the monitored output voltage and current may be transmitted to the wireless power transmitter 100 through the communication unit 260 in real time.

In addition, the main controller 250 may compare the rectified DC voltage with a predetermined reference voltage and determine whether the voltage is in an overvoltage state or an under-voltage state. When a system error state is sensed as a result of the determination, the controller 250 may transmit the sensed result to the wireless power transmitter 100 through the communication unit 260.

When the system error state is sensed, the main controller 250 may control the operation of the rectifier 220 and the DC-DC converter 230 or control the power supplied to the load 240 using a predetermined overcurrent interruption circuit including at least one of a switch and a Zener diode, in order to prevent the load from being damaged.

In FIG. 1, the main controller 150, 250 and the communication unit 160, 260 of each of the transmitter and the receiver are shown as being configured as different modules, but this is merely one embodiment. It is to be noted that the main controller 150, 250 and the communication unit 160, 260 can be configured as a single module.

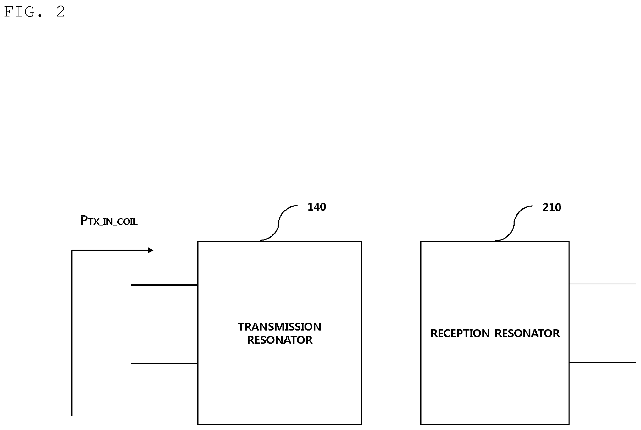

FIG. 2 is a diagram illustrating a type and characteristics of a wireless power transmitter according to an embodiment of the present disclosure.

Types and characteristics of the wireless power transmitter and the wireless power receiver according to the present disclosure may be classified into classes and categories.

The type and characteristics of the wireless power transmitter may be broadly identified by the following three parameters.

First, the wireless power transmitter may be identified by a class determined according to the intensity of the maximum power applied to the transmission resonator 140.

Here, the class of the wireless power transmitter may be determined by comparing the maximum value of the power P_{TX_IN_COIL} applied to the transmission resonator 140 with a predefined maximum input power for each class specified in a wireless power transmitter class table (hereinafter referred to as Table 1). Here, P_{TX_IN_COIL} may be an average real number value calculated by dividing the product of the voltage V(t) and the current I(t) applied to the transmission resonator 140 for a unit time by the unit time.

**TABLE 1**

| Class | Maximum input power | Minimum category support requirements | Maximum number of supportable devices |
|---|---|---|---|
| Class 1 | 2 W | 1 x Class 1 | 1 x Class 1 |
| Class 2 | 10 W | 1 x Class 3 | 2 x Class 2 |
| Class 3 | 16 W | 1 x Class 4 | 2 x Class 3 |
| Class 4 | 33 W | 1 x Class 5 | 3 x Class 3 |
| Class 5 | 50 W | 1 x Class 6 | 4 x Class 3 |
| Class 6 | 70 W | 1 x Class 6 | 5 x Class 3 |

The classes shown in Table 1 are merely an embodiment, and new classes may be added or existing classes may be deleted. It should also be noted that the maximum input power for each class, the minimum category support requirements, and the maximum number of supportable devices may vary depending on the use, shape, and implementation of the wireless power transmitter.

For example, referring to Table 1, when the maximum value of the power P_{TX_IN_COIL} applied to the transmission resonator 140 is greater than or equal to the value of P_{TX_IN_MAX} corresponding to Class 3 and less than the value of P_{TX_IN_MAX} corresponding to Class 4, the class of the wireless power transmitter may be determined as Class 3.

Second, the wireless power transmitter may be identified according to the minimum category support requirements corresponding to the identified class.

Here, the minimum category support requirement may be a supportable number of wireless power receivers corresponding to the highest-level category of the wireless power receiver categories supportable by the wireless power transmitter of the corresponding class. That is, the minimum category support requirement may be the minimum number of the maximum category devices supportable by the corresponding wireless power transmitter. Here, the wireless power transmitter may support all categories of wireless power receivers lower than or equal to the maximum category according to the minimum category requirement.

However, if the wireless power transmitter can support a wireless power receiver of a category higher than the category specified in the minimum category support requirement, the wireless power transmitter may not be restricted in supporting the corresponding wireless power receiver.

For example, referring to Table 1, a wireless power transmitter of Class 3 should support at least one wireless power receiver of Category 5. Of course, in this case, the wireless power transmitter may support a wireless power receiver 200 that falls into a category lower than the category level corresponding to the minimum category support requirement.

It should also be noted that the wireless power transmitter may support a wireless power receiver of a higher-level category upon determining that the category whose level is higher than the category corresponding to the minimum category support requirement can be supported.

Third, the wireless power transmitter may be identified by the maximum number of supportable devices corresponding to the identified class. Here, the maximum number of supportable devices may be identified by the maximum number of supportable wireless power receivers corresponding to the lowest level category among the categories which are supportable in the class (hereinafter simply referred to as the maximum number of supportable devices).

For example, referring to Table 1, the wireless power transmitter of Class 3 should support up to two wireless power receivers corresponding to Category 3 which is the lowest level category.

However, if the wireless power transmitter can support more than the maximum number of devices corresponding to the class thereof, it is not restricted in supporting more than the maximum number of devices.

The wireless power transmitter according to the present disclosure must perform wireless power transmission within the available power for at least up to the number defined in Table 1 if there is no particular reason not to allow the power transmission request from the wireless power receivers.

In one example, if there is not enough available power to accept the power transmission request, the wireless power transmitter may not accept a power transmission request from the wireless power receiver. Alternatively, the wireless power transmitter may control adjustment of power of the wireless power receiver.

In another example, when the wireless power transmitter accepts a power transmission request, it may not accept a power transmission request from a corresponding wireless power receiver if the number of acceptable wireless power receivers is exceeded.

In another example, the wireless power transmitter may not accept a power transmission request from a wireless power receiver if the category of the wireless power receiver requesting power transmission exceeds a category level that can be supported in the class of the wireless power transmitter.

In another example, the wireless power transmitter may not accept a power transmission request of the wireless power receiver if the internal temperature thereof exceeds a reference value.

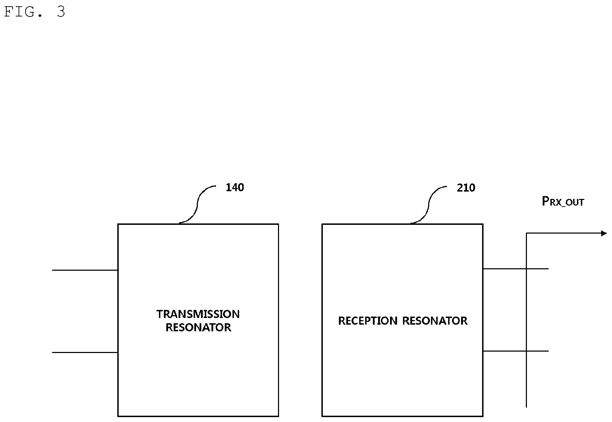

FIG. 3 is a diagram illustrating a type and characteristics of a wireless power receiver according to an embodiment of the present disclosure.

As shown in FIG. 3, the average output power P_{RX_OUT} of the reception resonator 210 is a real number calculated by dividing the product of the voltage V(t) and the current I(t) output by the reception resonator 210 for a unit time by the unit time.

The category of the wireless power receiver may be defined based on the maximum output power P_{RX_OUT_MAX} of the reception resonator 210, as shown in Table 2 below.

**TABLE 2**

| Category | Maximum input power | Application example |
|---|---|---|
| Category 1 | TBD | Bluetooth handset |
| Category 2 | 3.5 W | Feature phone |
| Category 3 | 6.5 W | Smartphone |
| Category 4 | 13 W | Tablet |
| Category 5 | 25 W | Small laptop |
| Category 6 | 37.5 W | Laptop |
| Category 6 | 50 W | TBD |

For example, if the charging efficiency at the load stage is 80% or more, the wireless power receiver of Category 3 may supply power of 5 W to the charging port of the load.

The categories disclosed in Table 2 are merely an embodiment, and new categories may be added or existing categories may be deleted. It should also be noted that the maximum output power for each category and the application examples shown in Table 2 may vary depending on the use, shape and implementation of the wireless power receiver.

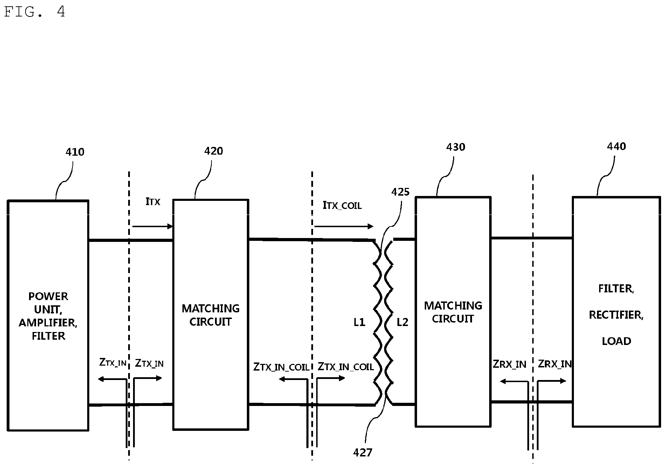

FIG. 4 shows equivalent circuit diagrams of a wireless power transmission system according to an embodiment of the present disclosure.

Specifically, FIG. 4 shows interface points on the equivalent circuit at which reference parameters, which will be described later, are measured.

Hereinafter, meanings of the reference parameters shown in FIG. 4 will be briefly described.

I_{TX} and I_{TX_COIL} denote the RMS (Root Mean Square) current applied to the matching circuit (or matching network) 420 of the wireless power transmitter and the RMS current applied to the transmission resonator coil 425 of the wireless power transmitter.

Z_{TX_IN} denotes an input impedance at the rear end of the power unit/amplifier/filter 410 of the wireless power transmitter and an input impedance at the front end of the matching circuit 420.

Z_{TX_IN_COIL} denotes an input impedance at the rear end of the matching circuit 420 and the front end of the transmission resonator coil 425.

L1 and L2 denote the inductance value of the transmission resonator coil 425 and the inductance value of the reception resonator coil 427, respectively.

Z_{RX_IN} denotes the input impedance at the rear end of the matching circuit 430 of the wireless power receiver and the front end of the filter/rectifier/load 440 of the wireless power receiver.

The resonant frequency used in the operation of the wireless power transmission system according to an embodiment of the present disclosure may be 6.78 MHz ± 15 kHz.

In addition, the wireless power transmission system according to an embodiment may provide simultaneous charging (i.e., multi-charging) for a plurality of wireless power receivers. In this case, even if a wireless power receiver is newly added or removed, the received power variation of the remaining wireless power receivers may be controlled so as not to exceed a predetermined reference value. For example, the received power variation may be ± 10%, but embodiments are not limited thereto.

The condition for maintaining the received power variation is that the existing wireless power receivers should not overlap a wireless power receiver that is added to or removed from the charging area.

When the matching circuit 430 of the wireless power receiver is connected to the rectifier, the real part of Z_{TX_IN} may be inversely proportional to the load resistance of the rectifier (hereinafter referred to as R_{RECT}). That is, an increase in R_{RECT} may decrease Z_{TX_IN}, and a decrease in R_{RECT} may increase Z_{TX_IN}.

The resonator coupling efficiency according to the present disclosure may be a maximum power reception ratio calculated by dividing the power transmitted from the reception resonator coil to the load 440 by the power carried in the resonant frequency band in the transmission resonator coil 425. The resonator coupling efficiency between the wireless power transmitter and the wireless power receiver may be calculated when the reference port impedance Z_{TX_IN} of the transmission resonator and the reference port impedance Z_{RX_IN} of the reception resonator are perfectly matched.

Table 3 below is an example of the minimum resonator coupling efficiencies according to the classes of the wireless power transmitter and the classes of the wireless power receiver according to an embodiment of the present disclosure.

**TABLE 3**

| | Category 1 | Category 2 | Category 3 | Category 4 | Category 5 | Category 6 | Category 7 |
|---|---|---|---|---|---|---|---|
| Class 1 | N/A | N/A | N/A | N/A | N/A | N/A | N/A |
| Class 2 | N/A | 74% (-1.3) | 74% (-1.3) | N/A | N/A | N/A | N/A |
| Class 3 | N/A | 74% (-1.3) | 74% (-1.3) | 76% (-1.2) | N/A | N/A | N/A |
| Class 4 | N/A | 50% (-3) | 65% (-1. 9) | 73% (-1.4) | 76% (-1.2) | N/A | N/A |
| Class 5 | N/A | 40% (-4) | 60% (-2.2) | 63% (-2) | 73% (-1.4) | 76% (-1.2) | N/A |
| Class 5 | N/A | 30% (-5.2) | 50% (-3) | 54% (-2.7) | 63% (-2) | 73% (-1.4) | 76% (-1.2) |

When a plurality of wireless power receivers is used, the minimum resonator coupling efficiencies corresponding to the classes and categories shown in Table 3 may increase.

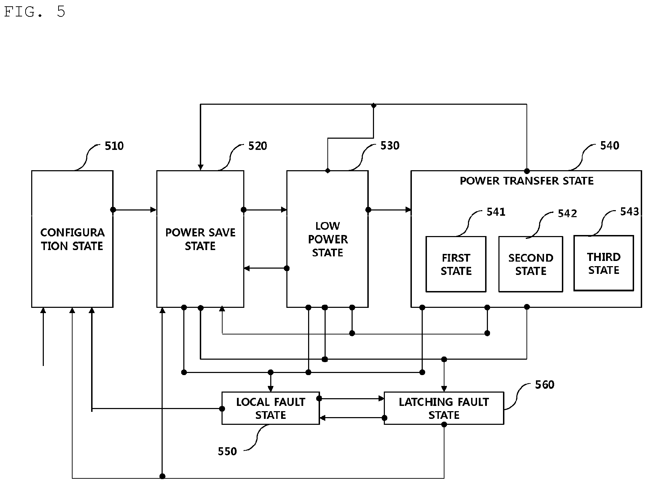

FIG. 5 is a state transition diagram illustrating a state transition procedure of a wireless power transmitter according to an embodiment of the present disclosure.

Referring to FIG. 5, the states of the wireless power transmitter may include a configuration state 510, a power save state 520, a low power state 530, a power transfer state 540, a local fault state 550, and a latching fault state 560.

When power is applied to the wireless power transmitter, the wireless power transmitter may transition to the configuration state 510. The wireless power transmitter may transition to a power save state 520 when a predetermined reset timer expires in the configuration state 510 or when the initialization procedure is completed.

In the power save state 520, the wireless power transmitter may generate a beacon sequence and transmit the same through a resonant frequency band.

Here, the wireless power transmitter may control the beacon sequence to be initiated within a predetermined time after entering the power save state 520. For example, the wireless power transmitter may control the beacon sequence to be initiated within 50 ms after transition to the power save state 520. However, embodiments are not limited thereto.

In the power save state 520, the wireless power transmitter may periodically generate and transmit a first beacon sequence for sensing a wireless power receiver, and sense change in impedance of the reception resonator, that is, load variation. Hereinafter, for simplicity, the first beacon and the first beacon sequence will be referred to as a short beacon and a short beacon sequence, respectively.

In particular, the short beacon sequence may be repeatedly generated and transmitted at a constant time interval t_{CYCLE} during a short period t_{SHORT_BEACON} such that the standby power of the wireless power transmitter may be reduced until a wireless power receiver is sensed. For example, t_{SHORT_BEACON} may be set to 30 ms or less, and t_{CYCLE} may be set to 250 ms ± 5 ms. In addition, the current intensity of the short beacon may be greater than a predetermined reference value, and may be gradually increased during a predetermined time period. For example, the minimum current intensity of the short beacon may be set to be sufficiently large such that a wireless power receiver of Category 2 or a higher category in Table 2 above may be sensed.

The wireless power transmitter according to the present disclosure may be provided with a predetermined sensing means for sensing change in reactance and resistance of the reception resonator according to the short beacon.

In addition, in the power save state 520, the wireless power transmitter may periodically generate and transmit a second beacon sequence for providing sufficient power necessary for booting and response of the wireless power receiver. Hereinafter, for simplicity, the second beacon and the second beacon sequence will be referred to as a long beacon and a long beacon sequence, respectively.

That is, the wireless power receiver may broadcast a predetermined response signal over an out-of-band communication channel when booting is completed through the second beacon sequence.

In particular, the long beacon sequence may be generated and transmitted at a constant time interval t_{LONG_BEACON_PERIOD} during a relatively long period t_{LONG_BEACON} compared to the short beacon to supply sufficient power necessary to boot the wireless power receiver. For example, t_{LONG_BEACON} may be set to 105 ms + 5 ms, and t_{LONG_BEACON_PERIOD} may be set to 850 ms. The current intensity of the long beacon may be stronger than the current intensity of the short beacon. In addition, the long beacon may maintain power of a certain intensity during the transmission period.

Thereafter, the wireless power transmitter may wait to receive a predetermined response signal during the long beacon transmission period after change in impedance of the reception resonator is sensed. Hereinafter, for simplicity, the response signal will be referred to as an advertisement signal. Here, the wireless power receiver may broadcast the advertisement signal in an out-of-band communication frequency band that is different from the resonant frequency band.

In one example, the advertisement signal may include at least one of or any one of message identification information for identifying a message defined in the out-of-band communication standard, a unique service or wireless power receiver identification information for identifying whether the wireless power receiver is legitimate or compatible with the wireless power transmitter, information about the output power of the wireless power receiver, information about the rated voltage/current applied to the load, antenna gain information about the wireless power receiver, information for identifying the category of the wireless power receiver, wireless power receiver authentication information, information about whether or not the overvoltage protection function is provided, and version information about the software installed on the wireless power receiver.

Upon receiving the advertisement signal, the wireless power transmitter may establish an out-of-band communication link with the wireless power receiver after transitioning from the power save state 520 to the low power state 530. Subsequently, the wireless power transmitter may perform the registration procedure for the wireless power receiver over the established out-of-band communication link. For example, if the out-of-band communication is Bluetooth low energy communication, the wireless power transmitter may perform Bluetooth pairing with the wireless power receiver and exchange at least one of the state information, characteristic information, and control information about each other via the paired Bluetooth link.

If the wireless power transmitter transmits a predetermined control signal for initiating charging via out-of-band communication, i.e. a predetermined control signal for requesting that the wireless power receiver transmit power to the load, to the wireless power receiver in the low power state 530, the state of the wireless power transmitter may transition from the low power state 530 to the power transfer state 540.

If the out-of-band communication link establishment procedure or registration procedure is not normally completed in the low power state 530, the wireless power transmitter may transition from the low power state 530 to the power save state 520.

A separate independent link expiration timer by which the wireless power transmitter may connect to each wireless power receiver may be driven, and the wireless power receiver may transmit a predetermined message for announcing its presence to the wireless power transmitter on a predetermined time cycle before the link expiration timer expires. The link expiration timer is reset each time the message is received. If the link expiration timer does not expire, the out-of-band communication link established between the wireless power receiver and the wireless power receiver may be maintained.

If all of the link expiration timers corresponding to the out-of-band communication link established between the wireless power transmitter and the at least one wireless power receiver have expired in the low power state 530 or the power transfer state 540, the wireless power transmitter may transition to the power save state 520.

In addition, the wireless power transmitter in the low power state 530 may drive a predetermined registration timer when a valid advertisement signal is received from the wireless power receiver. When the registration timer expires, the wireless power transmitter in the low power state 530 may transition to the power save state 520. At this time, the wireless power transmitter may output a predetermined notification signal announcing that registration has failed through a notification display means (including, for example, an LED lamp, a display screen, and a beeper) provided in the wireless power transmitter.

Further, in the power transfer state 540, when charging of all connected wireless power receivers is completed, the wireless power transmitter may transition to the low power state 530.

In particular, the wireless power receiver may allow registration of a new wireless power receiver in states other than the configuration state 510, the local fault state 550, and the latching fault state 560.

In addition, the wireless power transmitter may dynamically control the transmit power based on the state information received from the wireless power receiver in the power transfer state 540.

Here, the receiver state information transmitted from the wireless power receiver to the wireless power transmitter may include at least one of required power information, information on the voltage and/or current measured at the rear end of the rectifier, charge state information, information for notifying the overcurrent, overvoltage and/or overheated state, and information indicating whether or not a means for cutting off or reducing power transferred to the load according to overcurrent or overvoltage is activated. The receiver state information may be transmitted with a predetermined periodicity or transmitted every time a specific event is generated. In addition, the means for cutting off or reducing the power transferred to the load according to the overcurrent or overvoltage may be provided using at least one of an ON/OFF switch and a Zener diode.

According to another embodiment, the receiver state information transmitted from the wireless power receiver to the wireless power transmitter may further include at least one of information indicating that an external power source is connected to the wireless power receiver by wire and information indicating that the out-of-band communication scheme has changed (e.g., the communication scheme may change from NFC (Near Field Communication) to BLE (Bluetooth Low Energy) communication).

According to another embodiment of the present disclosure, a wireless power transmitter may adaptively determine the intensity of power to be receiver by each wireless power receiver based on at least one of the currently available power of the power transmitter, the priority of each wireless power receiver, and the number of connected wireless power receivers. Here, the power intensity of each wireless power receiver may be determined as a proportion of power to be received with respect to the maximum power that may be processed by the rectifier of the corresponding wireless power receiver.

Thereafter, the wireless power transmitter may transmit, to the wireless power receiver, a predetermined power control command including information about the determined power intensity. Then, the wireless power receiver may determine whether power control can be performed based on the power intensity determined by the wireless power transmitter, and transmit the determination result to the wireless power transmitter through a predetermined power control response message.

According to another embodiment of the present disclosure, a wireless power receiver may transmit predetermined receiver state information indicating whether wireless power control can be performed according to a power control command of a wireless power transmitter before receiving the power control command.

The power transfer state 540 may be any one of a first state 541, a second state 542 and a third state 543 depending on the power reception state of the connected wireless power receiver.

In one example, the first state 541 may indicate that the power reception state of all wireless power receivers connected to the wireless power transmitter is a normal voltage state.

The second state 542 may indicate that the power reception state of at least one wireless power receiver connected to the wireless power transmitter is a low voltage state and there is no wireless power receiver which is in a high voltage state.

The third state 543 may indicate that the power reception state of at least one wireless power receiver connected to the wireless power transmitter is a high voltage state.

When a system error is sensed in the power save state 520, the low power state 530, or the power transfer state 540, the wireless power transmitter may transition to the latching fault state 560.

The wireless power transmitter in the latching fault state 560 may transition to either the configuration state 510 or the power save state 520 upon determining that all connected wireless power receivers have been removed from the charging area.

In addition, when a local fault is sensed in the latching fault state 560, the wireless power transmitter may transition to the local fault state 550. Here, the wireless power transmitter in the local fault state 550 may transition back to the latching fault state 560 when the local fault is released.

On the other hand, in the case where the wireless power transmitter transitions from any one state among the configuration state 510, the power save state 520, the low power state 530, and the power transfer state 540 to the local fault state 550, the wireless power transmitter may transition to the configuration state 510 once the local fault is released.

The wireless power transmitter may interrupt the power supplied to the wireless power transmitter once it transitions to the local fault state 550. For example, the wireless power transmitter may transition to the local fault state 550 when a fault such as overvoltage, overcurrent, or overheating is sensed. However, embodiments are not limited thereto.

In one example, the wireless power transmitter may transmit, to at least one connected wireless power receiver, a predetermined power control command for reducing the intensity of power received by the wireless power receiver when overcurrent, overvoltage, or overheating is sensed.

In another example, the wireless power transmitter may transmit, to at least one connected wireless power receiver, a predetermined control command for stopping charging of the wireless power receiver when overcurrent, overvoltage, or overheating is sensed.

Through the above-described power control procedure, the wireless power transmitter may prevent damage to the device due to overvoltage, overcurrent, overheating, or the like.

If the intensity of the output current of the transmission resonator is greater than or equal to a reference value, the wireless power transmitter may transition to the latching fault state 560. The wireless power transmitter that has transitioned to the latching fault state 560 may attempt to make the intensity of the output current of the transmission resonator less than or equal to a reference value for a predetermined time. Here, the attempt may be repeated a predetermined number of times. If the latching fault state 560 is not released despite repeated execution, the wireless power transmitter may send, to the user, a predetermined notification signal indicating that the latching fault state 560 is not released, using a predetermined notification means. In this case, when all of the wireless power receivers positioned in the charging area of the wireless power transmitter are removed from the charging area by the user, the latching fault state 560 may be released.

On the other hand, if the intensity of the output current of the transmission resonator falls below the reference value within a predetermined time, or if the intensity of the output current of the transmission resonator falls below the reference value during the predetermined repetition, the latching fault state 560 may be automatically released. In this case, the wireless power transmitter may automatically transition from the latching fault state 560 to the power save state 520 to perform the sensing and identification procedure for a wireless power receiver again.

The wireless power transmitter in the power transfer state 540 may transmit continuous power and adaptively control the transmit power based on the state information on the wireless power receiver and predefined optimal voltage region setting parameters.

For example, the predefined optimal voltage region setting parameters may include at least one of a parameter for identifying a low voltage region, a parameter for identifying an optimum voltage region, a parameter for identifying a high voltage region, and a parameter for identifying an overvoltage region.

The wireless power transmitter may increase the transmit power if the power reception state of the wireless power receiver is in the low voltage region, and reduce the transmit power if the power reception state is in the high voltage region.

The wireless power transmitter may also control the transmit power to maximize the power transmission efficiency.

The wireless power transmitter may also control the transmit power such that the deviation of the amount of power required by the wireless power receiver is less than or equal to a reference value.

In addition, the wireless power transmitter may stop transmitting power when the output voltage of the rectifier of the wireless power receiver reaches a predetermined overvoltage region-namely, when overvoltage is sensed.

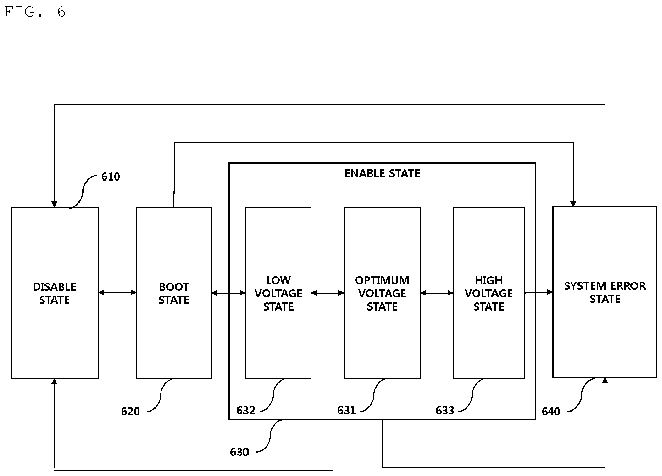

FIG. 6 is a state transition diagram illustrating a wireless power receiver according to an embodiment of the present disclosure.

Referring to FIG. 6, the states of the wireless power receiver may include a disable state 610, a boot state 620, an enable state (or On state) 630 and a system error state 640.

The state of the wireless power receiver may be determined based on the intensity of the output voltage at the rectifier end of the wireless power receiver (hereinafter referred to as V_{RECT} for simplicity) .

The enable state 630 may be divided into an optimum voltage 631, a low voltage state 632 and a high voltage state 633 by the value of V_{RECT}.

The wireless power receiver in the disable state 610 may transition to the boot state 620 if the measured value of V_{RECT} is greater than or equal to the predefined value of V_{RECT_BOOT}.

In the boot state 620, the wireless power receiver may establish an out-of-band communication link with a wireless power transmitter and wait until the value of V_{RECT} reaches the power required at the load stage.

Upon sensing that the value of V_{RECT} has reached the power required at the load stage, the wireless power receiver in the boot state 620 may transition to the enable state 630 and begin charging.

The wireless power receiver in the enable state 630 may transition to the boot state 620 upon sensing that charging is completed or interrupted.

In addition, the wireless power receiver in the enable state 630 may transition to the system error state 640 when a predetermined system error is sensed. Here, the system error may include overvoltage, overcurrent, and overheating, as well as other predefined system error conditions.

In addition, the wireless power receiver in the enable state 630 may transition to the disable state 610 if the value of V_{RECT} falls below the value of V_{RECT_BOOT}.

In addition, the wireless power receiver in the boot state 620 or the system error state 640 may transition to the disable state 610 if the value of V_{RECT} falls below the value of V_{RECT_BOOT}.

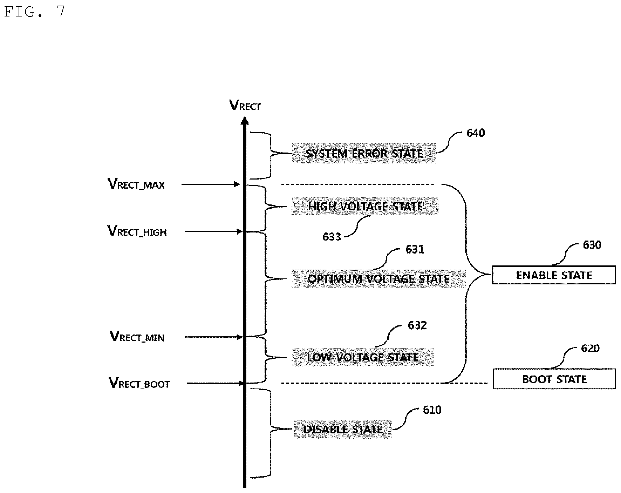

Hereinafter, state transition of the wireless power receiver in the enable state 630 will be described in detail with reference to FIG. 7.

FIG. 7 illustrates operation regions of a wireless power receiver according to V_{RECT} according to an embodiment of the present disclosure.

Referring to FIG. 7, if the value of V_{RECT} is less than a predetermined value of V_{RECT_BOOT}, the wireless power receiver is maintained in the disable state 610.

Thereafter, when the value of V_{RECT} is increased beyond V_{RECT_BOOT}, the wireless power receiver may transition to the boot state 620 and broadcast an advertisement signal within a predetermined time. Thereafter, when the advertisement signal is sensed by the wireless power transmitter, the wireless power transmitter may transmit, to the wireless power receiver, a predetermined connection request signal for establishing an out-of-band communication link.

Once the out-of-band communication link is normally established and successfully registered, the wireless power receiver may wait until the value of V_{RECT} reaches the minimum output voltage of the rectifier for normal charging (hereinafter referred to as V_{RECT_MIN} for simplicity) .

If the value of V_{RECT} exceeds V_{RECT_MIN}, the wireless power receiver may transition from the boot state 620 to the enable state 630 and may begin charging the load.

If the value of V_{RECT} in the enable state 630 exceeds a predetermined reference value V_{RECT_MAX} for determining overvoltage, the wireless power receiver may transition from the enable state 630 to the system error state 640.

Referring to Figure 7, the enable state 630 may be divided into the low voltage state 632, the optimum voltage 631 and the high voltage state 633 according to the value of V_{RECT}.

The low voltage state 632 may refer to a state in which V_{RECT_BOOT} ≤ V_{RECT} ≤ V_{RECT_MIN}, the optimum voltage state 631 may refer to a state in which V_{RECT_MIN} < V_{RECT} ≤ V_{RECT_HIGH}, and the high voltage state 633 may refer to a state in which V_{RECT_HIGH} < V_{RECT} ≤ V_{RECT_MAX}.

In particular, the wireless power receiver having transitioned to the high voltage state 633 may suspend the operation of cutting off the power supplied to the load for a predetermined time (hereinafter referred to as a high voltage state maintenance time for simplicity). The high voltage state maintenance time may be predetermined so as not to cause damage to the wireless power receiver and the load in the high voltage state 633.

When the wireless power receiver transitions to the system error state 640, it may transmit a predetermined message indicating occurrence of overvoltage to the wireless power transmitter through the out-of-band communication link within a predetermined time.

The wireless power receiver may also control the voltage applied to the load using an overvoltage interruption means provided to prevent damage to the load due to overvoltage in the system fault state 630. Here, an ON/OFF switch and/or a Zener diode may be used as the overvoltage interruption means.

Although a method and means for coping with a system error in a wireless power receiver when overvoltage is generated and the wireless power receiver transitions to the system error state 640 have been described in the above embodiment, this is merely an embodiment. In other embodiments, the wireless power receiver may transition to the system error state due to overheating, overcurrent, and the like.

As an example, in the case where the wireless power receiver transitions to the system error state due to overheating, the wireless power receiver may transmit a predetermined message indicating the occurrence of overheating to the wireless power transmitter. In this case, the wireless power receiver may drive a cooling fan or the like to reduce the internally generated heat.

According to another embodiment of the present disclosure, a wireless power receiver may receive wireless power in operative connection with a plurality of wireless power transmitters. In this case, the wireless power receiver may transition to the system error state 640 upon determining that the wireless power transmitter from which the wireless power receiver is determined to actually receive wireless power is different from the wireless power transmitter with which the out-of-band communication link is actually established.

Hereinafter, a procedure of signaling between a wireless power transmitter and a wireless power receiver according to the present disclosure will be described in detail with reference to the drawings.

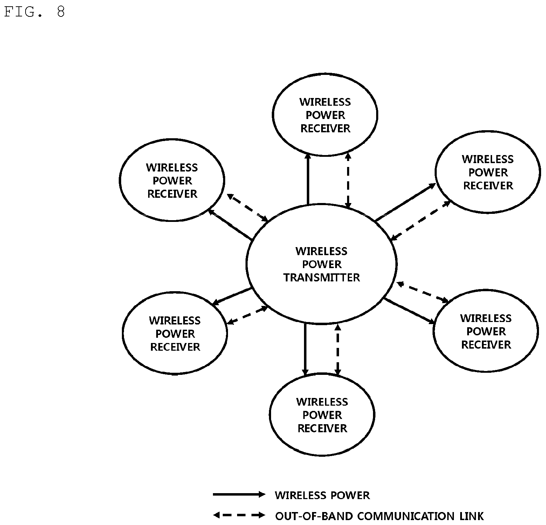

FIG. 8 is a configuration diagram of a wireless power transmission system according to an embodiment of the present disclosure.

As shown in FIG. 8, a wireless power transmission system may be configured by star topology, and a wireless power transmitter may collect various kinds of characteristics information and state information from a wireless power receiver over an out-of-band communication link, and control operation and transmit power of the wireless power receiver based on the collected information.

The wireless power transmitter may also transmit the characteristics information thereabout and a predetermined control signal to the wireless power receiver over the out-of-band communication link.

The wireless power transmitter may also determine the order of power transmission to the connected wireless power receivers and may transmit the wireless power according to the determined order of power transmission. For example, the wireless power transmitter may determine the order of power transmission based on at least one of the priorities of the wireless power receivers, power reception efficiencies of the wireless power receivers or the power transmission efficiency of the wireless power transmitter, the charging states of the wireless power receivers, and information indicating whether a system error has occurred in the wireless power receivers.

The wireless power transmitter may also determine the amount of power transmitted for each connected wireless power receiver. For example, the wireless power transmitter may calculate the amount of power to be transmitted to each wireless power receiver based on the currently available amount of power and the power reception efficiency of each of the wireless power receivers, and transmit information about the calculated amount of power to the wireless power receivers over a predetermined control message.

The wireless power transmitter may also generate and provide a time synchronization signal to the wireless power receiver to obtain time synchronization with the network-connected wireless power receiver(s). Here, the time synchronization signal may be transmitted through a frequency band for wireless power transmission, that is, in-band, or a frequency band for out-of-band communication, that is, an out-of-band. The wireless power transmitter and the wireless power receiver may manage the communication timing and communication sequence of each other based on the time synchronization signal.

While FIG. 8 illustrates a configuration in which a wireless power transmission system including one wireless power transmitter and a plurality of wireless power receivers is networked in star topology, this is only an embodiment. In a wireless power transmission system according to another embodiment of the present disclosure, a plurality of wireless power transmitters and a plurality of wireless power receivers may be network-connected to transmit and receive wireless power. In this case, the wireless power transmitters may exchange the state information thereabout over a separate communication channel. In addition, if a wireless power receiver is a mobile device, the wireless power receiver may receive seamless power during movement through handover between the wireless power transmitters.

The wireless power transmitter may operate as a network coordinator and may exchange information with the wireless power receiver over an out-of-band communication link. For example, the wireless power transmitter may receive various kinds of information of the wireless power receiver to generate and manage a predetermined device control table, and may transmit network management information to the wireless power receiver with reference to the device control table. This allows the wireless power transmitter to create and maintain a wireless power transmission system network.

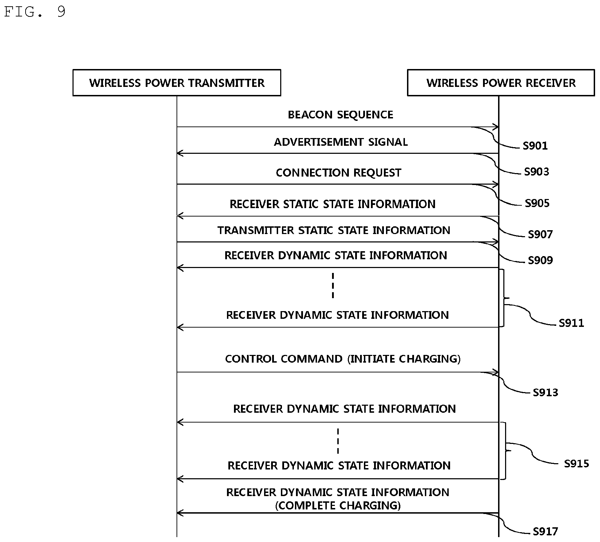

FIG. 9 is a flowchart illustrating a wireless charging procedure according to an embodiment of the present disclosure.

Referring to FIG. 9, the wireless power transmitter may generate a beacon sequence and transmit the beacon sequence through a transmission resonator when configuration of a wireless power transmitter, namely, booting, is completed (S901).

Upon sensing the beacon sequence, the wireless power receiver may broadcast an advertisement signal including the identification information and characteristics information thereabout (S903). Here, it should be noted that the advertisement signal can be repeatedly transmitted with a predetermined periodicity until a connection request signal, which will be described later, is received from the wireless power transmitter.

Upon receiving the advertisement signal, the wireless power transmitter may transmit a predetermined connection request signal for establishing an out-of-band communication link to the wireless power receiver (S905).

Upon receiving the connection request signal, the wireless power receiver may establish an out-of-band communication link and transmit static state information thereabout over the established out-of-band communication link (S907).

Here, the static state information about the wireless power receiver may include at least one of category information, hardware and software version information, maximum rectifier output power information, initial reference parameter information for power control, information for identifying equipment of a power adjustment function, information about a supported out-of-band communication scheme, information about a supported power control algorithm, or preferred rectifier end voltage value information initially set in the wireless power receiver.

Upon receiving the static state information about the wireless power receiver, the wireless power transmitter may transmit the static state information thereabout to the wireless power receiver over the out-of-band communication link (S909).

Here, the static state information about the wireless power transmitter may include at least one of transmitter power information, class information, hardware and software version information, information about the maximum number of supported wireless power receivers, and/or information about the number of currently connected wireless power receivers.

Thereafter, the wireless power receiver may monitor its own real-time power reception state and charging state and may transmit the dynamic state information to the wireless power transmitter periodically or when a specific event occurs (S911).

Here, the dynamic state information about the wireless power receiver may include at least one of information about the rectifier output voltage and current, information about the voltage and current applied to a load, information about the measured temperature of the inside of the wireless power receiver, reference parameter change information for power control (a minimum rectified voltage value, a maximum rectified voltage value, and an initially set preferred rectifier end voltage change value), charging state information, or system error information. The wireless power transmitter may perform power adjustment by changing the set value included in the existing static state information upon receiving the reference parameter change information for power control.

In addition, when sufficient power for charging the wireless power receiver is prepared, the wireless power transmitter may send a predetermined control command over the out-of-band communication link to control the wireless power receiver to start the charging operation (S913).

Thereafter, the wireless power transmitter may receive dynamic state information from the wireless power receiver and dynamically control the transmit power (S915).

In addition, when an internal system error is sensed or charging is completed, the wireless power receiver may transmit dynamic state information to the wireless power transmitter, including data for identifying a corresponding system error and/or data indicating that charging is complete (S917). Here, the system error may include overcurrent, overvoltage, and overheating.

According to another embodiment of the present disclosure, when a currently available power cannot meet the required power of all the connected wireless power receivers, the wireless power transmitter may redistribute the power to be transmitted to the respective wireless power receivers, and transmit the redistributed power to the corresponding wireless power receiver.

In addition, when a new wireless power receiver is registered during wireless charging, the wireless power transmitter may redistribute the power to be received by the respective connected wireless power receivers based on the currently available power and transmit the same to the corresponding wireless power receivers through a predetermined control command.

In addition, when charging of a connected wireless power receiver is completed or the out-of-band communication link is released (for example, when the wireless power receiver is removed from the charging area) during wireless charging, the wireless power transmitter may redistribute the power to be received by the other wireless power receivers and transmit the same to the corresponding wireless power receivers through a predetermined control command.

The wireless power transmitter may also check, through a predetermined control procedure, whether a wireless power receiver is equipped with a power control function. In this case, when the power redistribution situation occurs, the wireless power transmitter may perform power redistribution only for the wireless power receiver equipped with the power control function.

For example, power redistribution may take place in the event that a valid advertisement signal is received from an unconnected wireless power receiver and thus a new wireless power receiver is added, a dynamic parameter indicating a current state of a connected wireless power receiver is received, it is recognized that there is no connected wireless power receiver anymore, charging of a connected wireless power receiver is completed, or an alarm message indicating a system error state of the connected wireless power receiver is received.

Here, the system error state may include an overvoltage state, an overcurrent state, an overheated state, and a network connection error state.

In one example, the wireless power transmitter may transmit power redistribution-related information to the wireless power receivers through a predetermined control command.

Here, the power redistribution-related information may include command information for power control of a wireless power receiver, information for identifying whether a power transmission request is permitted or denied, and time information used for the wireless power receiver to generate a valid load variation.

Here, the command for power control of the wireless power receiver may include a first command for controlling received power provided to the load by the wireless power receiver, a second command for permitting the wireless power receiver to indicate that charging is being performed, and an Adjust Power command indicating the ratio of the maximum power that may be provided by the wireless power transmitter to the maximum rectifier power of the wireless power receiver.

If the wireless power receiver does not support the Adjust Power command, the wireless power transmitter may not transmit the Adjust Power command to the wireless power receiver.

For example, when a new wireless power receiver is registered, the wireless power transmitter may determine whether it can provide the amount of power required by the wireless power receiver, based on the amount of available power of the wireless power transmitter. If the required amount of power exceeds the amount of available power as a result of the determination, the wireless power transmitter may check whether or not the corresponding wireless power receiver is equipped with the power control function. If the corresponding wireless power receiver is equipped with the power control function as a result of checking, the wireless power receiver may determine the amount of power that the wireless power receiver will receive in the range of the amount of available power, and may transmit the determined result to the wireless power receiver through a predetermined control command.

Of course, power redistribution may be performed within a range within which the wireless power transmitter and the wireless power receiver can operate normally and/or within a range within which normal charging is possible.

In addition, the information for identifying whether a power transmission request is permitted or denied may include a condition for permission and a reason for denial.

As an example, the permission condition may include permission granted on a condition of waiting for a certain time due to lack of available power. The reason for denial may include denial due to lack of available power, denial due to the number of wireless power receivers exceeding an acceptable number, denial due to overheating of the wireless power transmitter, and denial due to the limited class of the wireless power transmitter.

A wireless power receiver according to another embodiment of the present disclosure may support a plurality of out-of-band communication schemes. If a currently established out-of-band communication link is to be changed to another scheme, the wireless power receiver may transmit a predetermined control signal to the wireless power transmitter to request change in out-of-band communication. Upon receiving the out-of-band communication change request signal, the wireless power transmitter may release the currently established out-of-band communication link and establish a new out-of-band communication link in the out-of-band communication scheme requested by the wireless power receiver.

For example, out-of-band communication schemes applicable to the present disclosure may include at least one of NFC (Near Field Communication), RFID (Radio Frequency Identification), BLE (Bluetooth Low Energy), WCDMA (Wideband Code Division Multiple Access), LTE(Long Term Evolution)/LTE-Advanced, or Wi-Fi.

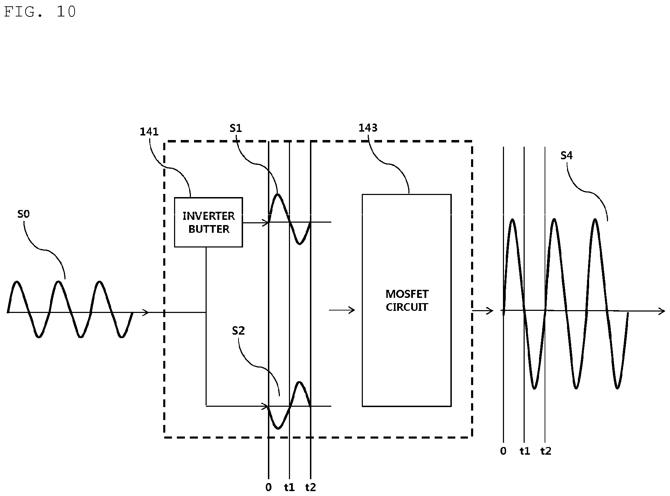

FIG. 10 is a block diagram of a wireless power transmitter according to an embodiment of the present disclosure.

Referring to FIG. 10, the wireless power transmitter of this embodiment may receive an initial signal S0 having a predetermined frequency and a predetermined amplitude and emit an amplified fourth signal S4 having the same frequency as the initial signal S0.

According to one embodiment, the frequency of the initial signal S0 may be 6.78 MHz ± 15 kHz.

The initial signal S0 may be supplied to the transmitter of the embodiment and branch into a first signal S1 whose phase has been converted 180° by the inverter buffer 141 and the second signal S2 which has not passed through the inverter buffer 141.

The first signal S1 and the second signal S2 may have the same amplitude and a phase difference of 180°.

The initial signal S0 having a predetermined frequency and a predetermined amplitude may be supplied to the transmitter and the first signal S1 and the second signal S2 which have opposite phases may be generated therefrom by the inverter buffer 141.

The first signal S1 and the second signal S2 may be supplied to the amplification unit 143, respectively.

The amplification unit 143 may amplify the first signal S1 and the second signal S2 to generate the fourth signal S4 having the same frequency.

The amplification unit 143 may be provided with a circuit including a MOSFET.

While the amplification unit 143 of the embodiment is illustrated, for simplicity, as being configured as a MOSFET circuit that amplifies an input signal using a MOSFET, the configuration of the amplification unit 143 of the embodiment is not limited to an amplification unit using the MOSFET. The amplification unit 143 may be any amplification unit configured to amplify an input signal at a predetermined scale and may be implemented using various circuit elements according to the needs of the user. It should be noted that the configuration of the amplification unit does not limit the scope of the claims of the present disclosure.

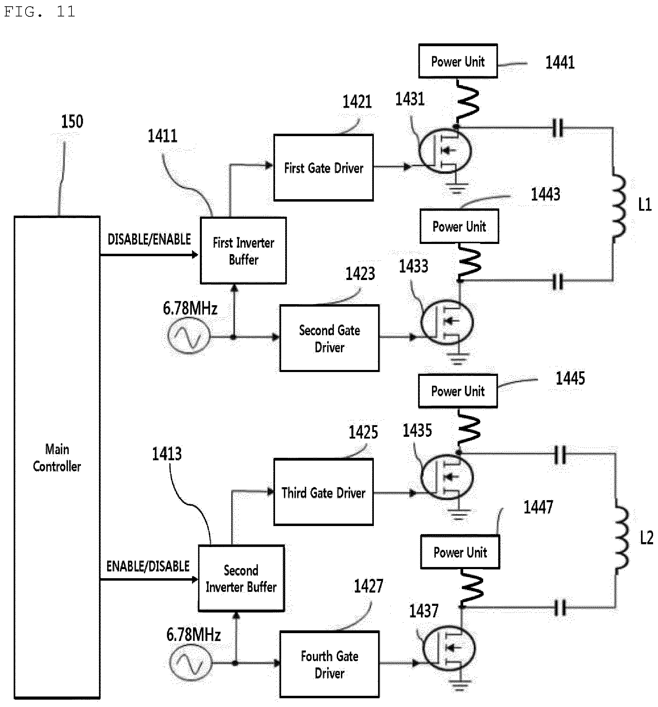

Hereinafter, a wireless power transmitter including various amplification units will be described with reference to FIGs. 11 to 14.

FIG. 11 is a circuit diagram of a wireless power transmitter according to an embodiment of the present disclosure.

Referring to FIG. 11, the wireless power transmitter of this embodiment may include a main controller 150, a plurality of inverter buffers 1411 and 1413 controlled by the main controller 150 so as to transition to the enable state or the disable state, a plurality of amplification units 1431, 1433, 1435, and 1437 configured to receive a current having a predetermined frequency to amplify the signal, and a plurality of coils L1 and L2 configured to transition to a state in which a magnetic filed is selectively generated or not by the plurality of amplification units 1431, 1433, 1435, and 1437.

The plurality of coils L1 and L2 may include a first coil L1 and a second coil L2.

For example, the main controller 150 may control the inverter buffers 1411 and 1413 to dynamically select a coil to be used for wireless power transmission.

For example, one end of the first coil L1 may be electrically connected to the first amplification unit 1431 and a first power unit 1441, and the other end of the first coil L1 may be electrically connected to the second amplification unit 1433 and a second power unit 1443.

One end of the second coil L2 may be electrically connected to the third amplification unit 1435 and a third power unit 1445 and the other end of the second coil L2 may be electrically connected to the fourth amplification unit 1437 and a fourth power unit 1447.

One end of the first amplification unit 1431 may be electrically connected to the first power unit 1441 to receive power and the other end of the first amplification unit 1431 may be electrically connected to a first gate driver 1421 configured to transition the first amplification unit 1431 to a state in which the first amplification unit 1431 is electrically connected to or disconnected from the first power unit 1441.

One end of the second amplification unit 1433 may be electrically connected to the second power unit 1433 to receive power and the other end of the second amplification unit 1433 may be arranged to electrically connect the second amplification unit 1433 to the second power unit 1443 and a second gate driver 1423.

As described above, the first gate driver 1421 and the second gate driver 1423 may control the first amplification unit 1431 and the second amplification unit 1433 such that the first amplification unit 1431 and the second amplification unit 1433 transition to a state in which the amplification units are electrically connected to or disconnected from the first power unit 1431 and the second power unit 1443 according to the phase of the input signal.

An initial signal having a predetermined frequency and a predetermined amplitude may be input to the second gate driver 1423 and a signal whose phase is converted through the first inverter buffer 1411 may be input to the first gate driver 1421.

The first gate driver 1421 and the second gate driver 1423 receiving the signals having phases opposite to each other may control the first amplification unit 1431 and the second amplification unit 1433 with a periodicity of a predetermined frequency so as to be set to a state in which the first amplification unit 1431 and the second amplification unit 1433 are electrically connected to or disconnected from the first power unit 1441 and the second power source 1443.

For example, the first gate driver 1421 receiving the initial signal at the same time as the second gate driver unit may control the first amplification unit 1431 so as to transition to a state in which the first amplification unit is electrically connected to the first power unit 1441, and the second gate driver 1423 may control the second amplification unit 1433 so as to transition to a state in which the second amplification unit is electrically disconnected from the second power unit 1443.

In this case, current flows from the upper portion of the first coil L1 downward.

In addition, when the first gate driver 1421 receives an initial signal after a predetermined time passes, the first gate driver may control the first amplification unit 1431 to transition to a state in which the first amplification unit is electrically disconnected from the first power unit 1441.

The second gate driver 1423 may control the second amplification unit 1433 to transition to a state in which the second amplification unit is electrically connected to the second power unit 1443, and thus a current may flow from the lower portion of the first coil L1 upward.

The lower portion of the first coil L1 may refer to a point where the first coil L1 is electrically connected to the second power source part 1443. The upper portion of the first coil L1 may refer to a point where the first coil L1 is electrically connected to the first power unit 1441.

At this time, the amplitude of the initial signal input by the first power unit 1441 and the second power unit 1443 is amplified by a predetermined multiplier, and a current having the same frequency as the initial signal flows through the first coil L1.

The direction of the current across the first coil L1 may be reversed with a periodicity of T/2 given that the periodicity of the initial signal is T.

As shown in the figure, the second coil L2 may also include the same independent circuit as the first coil L1. Thus, a current having the amplitude amplified by a predetermined multiple of the initial signal and the same frequency as the initial signal may flow through the coil L2.

As the first inverter buffer 1411 and the second inverter buffer 1413 are caused to transition to the enable state or the disable state by the main controller 150, the current may be controlled to selectively flow through the first coil L1 or the second coil L2.

Of course, the main controller 150 of the embodiment may control both the first inverter buffer 1411 and the second inverter buffer 1413 to transition to the enable state such that current may flow through both the first coil L1 and the second coil L2, or may control both the first inverter buffer 1411 and the second inverter buffer 1413 to transition to the disable state such that current does not flow through any of the first coil L1 and the second coil L2. The scope of the claims of the present disclosure is not limited to the above-described embodiments.

While two coils L1 and L2 are illustrated in the figure as being provided in the embodiment, embodiments are not limited thereto. The user may provide two or more coils and two or more amplification units configured to supply an amplified current to the coils, but the scope of the claims of the present disclosure is not limited thereto.

The inductor between the power unit and the amplification units in the figure may be omitted or another element may be added.

In this case, however, the inverter buffers 1411 and 1413, the gate drivers 1423 to 1427 and the amplification units 1431 to 1437 are increased in number by the number of the coils L1 and L2, resulting in increase in the volume of the wireless power transmitter of the embodiment and production costs are increased.

The capacitors electrically connected to the coils L1 and L2 may be omitted or another element, which may be a resonator including a coil and a capacitor, may be added.

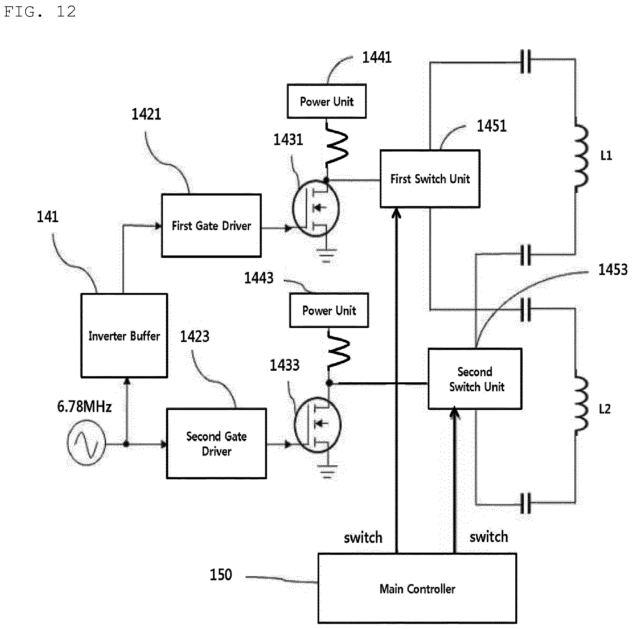

FIG. 12 is a circuit diagram of a wireless power transmitter according to another embodiment of the present disclosure.

Referring to FIG. 12, the wireless power transmitter of the embodiment may include a plurality of coils L1 and L2 configured to generate a magnetic field, a plurality of switch units 1451 and 1453 configured to control ON/OFF of currents flowing through the plurality of coils L1 and L2, a main controller 150 configured to control a connection state of the plurality of switch units 1451 and 1453, and amplification units 1431 and 1433 configured to amplify an initial signal.

The inverter buffer 141, the plurality of gate drivers 1421 and 1423, the amplification units 1431 and 1433 and the power units 1441 and 1443 are the same as those of the wireless power transmitter of the embodiment shown in FIG. 11, and thus a detailed description thereof will be omitted. Only differences from the previous embodiment will be described below.

The plurality of coils L1 and L2 may include a first coil L1 and a second coil L2.

The first coil L1 may be arranged such that one end thereof is electrically connected to the first switch unit 1451 and the other end thereof is electrically connected to the second switch unit 1453.

The second coil L2 may be arranged such that one end thereof is electrically connected to the first switch unit 1451 and the other end thereof is electrically connected to the second switch unit 1453.

Current may be controlled to flow through the first coil L1 or the second coil L2 by the first switch unit 1451 and the second switch unit 1453.

For example, the main controller 150 may cause the first switch unit 1451 to transition to a state of electrically connecting one end of the first coil L1 to the first amplification unit 1431 and cause the second switch unit 1453 to transition to a state of connecting the other end of the first coil L1 to the second amplification unit 1433.

In this case, a current flows through the first coil L1, but no current flows through the second coil L2.

In contrast, the main controller 150 may cause the first switch unit 1451 to transition to a state of electrically connecting one end of the second coil L2 to the first amplification unit 1431 and cause the second switch unit 1453 to transition to a state of electrically connecting the other end of the second coil L2 to the second amplification unit 1433. In this case, no current flows through the first coil L1, but current flows through the second coil L2.

Unlike the wireless power transmitter of FIG. 11 in which the main controller 150 causes the first inverter buffer 1411 and the second inverter buffer 1413 to transition to the enable state or the disable state such that current flows simultaneously or selectively through the first coil L1 or the second coil L2, the wireless power transmitter of the embodiment shown in FIG. 12 includes one inverter buffer 141, and the main controller 150 thereof controls the first switch unit 1451 and the second switch unit 1452 to cause current to flow simultaneously or selectively through the first coil L1 or the second coil L2.

Unlike the wireless power transmitter shown in FIG. 11, one inverter buffer 141 and only two amplification units 1431 electrically connected thereto to amplify an initial signal are provided to perform the same function, but the area of the transmitter is reduced, thus reducing cost.

However, in the wireless power transmitter of this embodiment, the main controller 150 is required to operate the first switch unit 1451 and the second switch unit 1453 to selectively supply current to the first coil L1 or the second coil L2, and therefore power consumption may increase, thereby deteriorating energy efficiency.

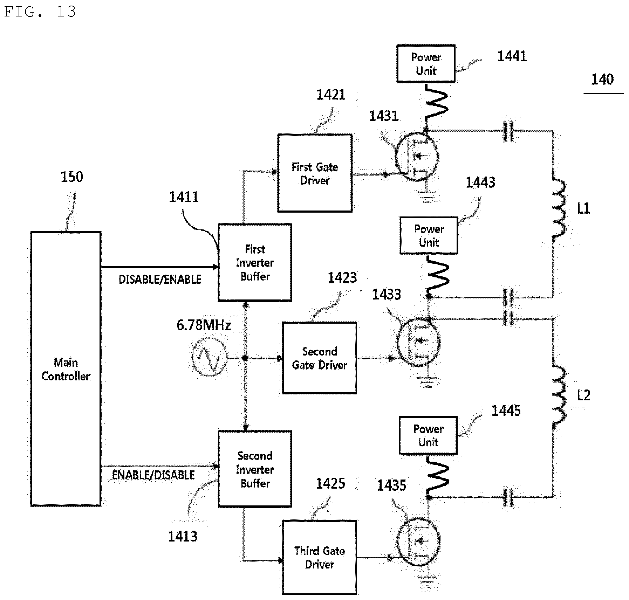

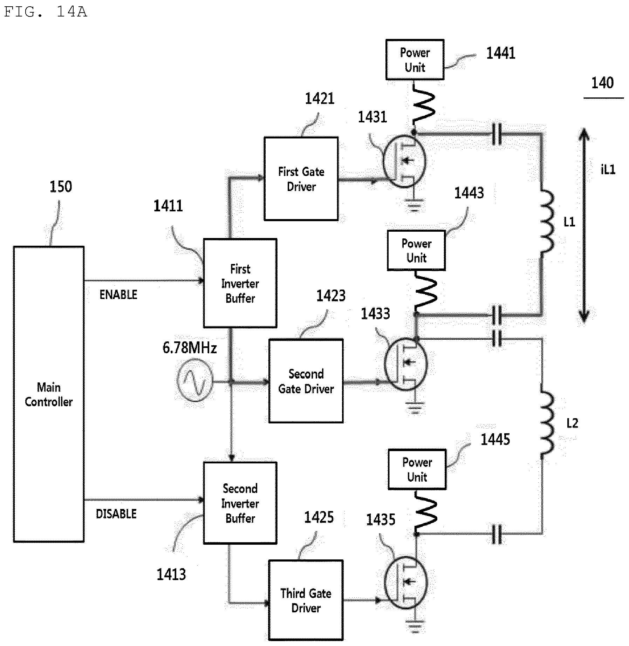

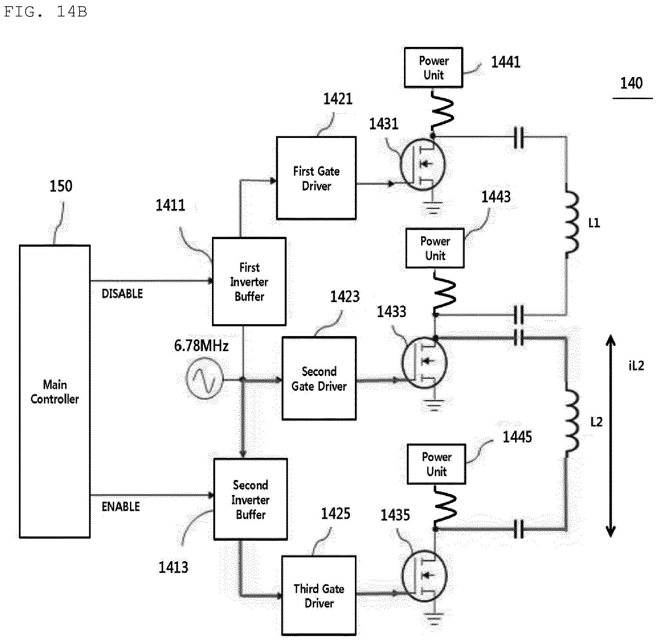

Hereinafter, a description will be given of a wireless power transmitter of another embodiment that addresses an issue of increase in the area of the transmitter, which is an issue of the wireless power transmitter of FIG. 11, and an issue of deterioration of energy efficiency according to increase in power consumption resulting from individual operation of switch units, which is an issue of the wireless power transmitter of FIG. 12, with reference to FIGs. 13 and 14.

FIG. 13 is a circuit diagram of a wireless power transmitter according to yet another embodiment of the present disclosure.

Referring to FIG. 13, the wireless power transmitter of the embodiment may include a plurality of coils L1 and L2 configured to generate a magnetic field, a plurality of amplification units 1431, 1433 and 1435 configured to control currents flowing through the plurality of coils L1 and L2, a plurality of inverter buffers 1411 and 1413 configured to convert the phases of the currents input to the amplification units 1431, 1433 and 1435, and a main controller 150 configured to cause the plurality of inverter buffers 1411 and 1413 to transition to the enable state or the disable state.

The plurality of coils L1 and L2 may include a first coil L1 and a second coil L2.

The first coil L1 may be arranged such that one end thereof is electrically connected to the first amplification unit 1431 and the first power unit 1441 and the other end thereof is electrically connected to the second amplification unit 1433 and the second power unit 1443.

The second coil L2 may be arranged such that one end thereof is electrically connected to the second amplification unit 1433 and the second power supply 1443 and the other end thereof is electrically connected to the third amplification unit 1435 and the third power unit 1445.

The first amplification unit 1431 may be arranged such that one end thereof is electrically connected to the first coil L1 and the first power unit 1441 and the other end thereof is electrically connected to the first gate driver 1421. The second amplification unit 1433 may be arranged such that one end thereof is electrically connected to the second power unit 1443, the first coil L1 and the second coil L2 and the other end thereof is electrically connected to the second gate driver 1423. The third amplification unit 1435 may be arranged such that one end thereof is electrically connected to the third power unit 1445 and the second coil L2 and the other end thereof is electrically connected to the third gate driver 1425.

The main controller 150 may control the first inverter buffer 1411 and the second inverter buffer 1413 to transition to the enable state or the disable state.

Regarding the operation of the main controller 150 of controlling the first inverter buffer 1411 and the second inverter buffer 1413 to transition to the enable state or disable state to cause current to flow through at least one of the first coil L1 or the second coil L2, a more detailed description will be given with reference to FIGs. 14A and 14B.

While the wireless power transmitter of the embodiment described above is illustrated in FIG. 13 as including two coils corresponding to the first coil L1 and the second coil L2, embodiments are not limited thereto. The user may configure the wireless power transmitter so as to include two or more coils, which does not limit the scope of claims of the present disclosure.

Unlike the wireless power transmitter shown in FIG. 11, which requires four amplification units 143 and gate drivers 142 to control the currents flowing through two coils, the second amplification unit 1431 is electrically connected to the first coil L1 and the second coil L2 at the same time and may thus control the currents flowing through the two coils L1 and L2 using only three amplification units 143 and the gate drivers 142 in controlling the current flowing through the two coils. Accordingly, the wireless power transmitter of this embodiment may be made compact by reducing the number of amplification units 143 and gate drivers 142.

In addition, unlike the wireless power transmitter shown in FIG. 12, in which the currents flowing through the coils L1 and L2 are controlled by the switch units controlled by the main controller 150, the wireless power transmitter of the embodiment omits the switch units that consume power, and thus has a technical feature of reducing unnecessary power loss.

The above-described effect may be more noticeable when the number of coils disposed in the wireless power transmitter of the embodiment is not limited to two, but is greater than two.

For example, the user may extend the present disclosure so as to include n coils including the first coil L1 and the second coil L2. In this case, the wireless power transmitter of the embodiment may include a first coil L1 to an n-th coil Ln.

In this case, the inverter buffer 141 may include n inverter buffers 141, which are first to n-th inverter buffers 1411 to 141(2n-1), and the gate driver 142 may include n-1 gate drivers 142, which are first to (n+1)-th gate drivers 1421 to 124 (2n+1). The amplification unit 143 may include n+1 amplification units 143, which are first to (n+1)-th amplification units 1431 to 143(2n+1), and the power unit 144 may include n+1 power units 144, which are first to (n+1)-th power units 1441 to 144(2n+1).

On the assumption that n coils are arranged in the wireless power transmitter of this embodiment, n+1 gate drivers 142 and n+1 amplification units 143 are needed.

On the other hand, if n coils are arranged in the wireless power transmitter shown in FIG. 11, 2n gate drivers 142 and 2n amplification units 143 may be needed, respectively.

Accordingly, the wireless power transmitter of the embodiment may omit (n-1) gate drivers 142 and amplification units 143, compared to the wireless power transmitter of FIG. 11, and therefore may reduce the area occupied by n-1 gate drivers 143 and n-1 amplification units 143 and the cost of the n-1 gate drivers 142 and the amplification units 143.

Hereinafter, a description will be given of the operation of the main controller 150 of controlling the first inverter buffer 1411 and the second inverter buffer 1413 to transition to the enable state or the disable state to cause current to flow through at least one of the first coil L1 or the second coil L2.

FIGs. 14A and 14B illustrate operation of a transmission resonator coil according to control by a main controller.

Referring to FIGs. 14A and 14B, the main controller 150 of the embodiment may perform a control operation to enable the first inverter buffer 1411 and disable the second inverter buffer 1413 such that current flows through the first coil L1.

More specifically, as the main controller 150 enables the first inverter buffer 1411, the phase of the current flowing into the first gate driver 1421 and the phase of the current flowing into the second gate driver 1423 may differ from each other by 180°.

The phase difference of 180° between the currents is merely illustrative for simplicity and is not intended to limit the scope of the present disclosure. The user may vary the phase difference of the currents as necessary.

As currents having a phase difference of 180° flow into the first amplification unit 1431 and the second amplification unit 1433, a first current iL1 may flow through the first coil L1 by changing the direction thereof with a periodicity corresponding to the phase difference of 180°.

However, since the main controller 150 disables the second inverter buffer 1423, the phase of the current flowing into the second gate driver 1423 and the phase of the current flowing into the third gate driver 1425 are the same.

Therefore, when currents having no phase difference flow into the second amplification unit 1433 and the third amplification unit 1435, no current may flow through the second coil L2.

In the embodiment shown in FIG. 14B, which is opposite to the embodiment shown in FIG. 14A, the main controller 150 disables the first inverter buffer 1411 and enables the second inverter buffer 1413 such that current flows only through the second coil L2.

If necessary, the user may cause the main controller 150 to enable or disable only the first inverter buffer 1411 or the second inverter buffer 1413 to cause current to selectively flow through a desired coil L1, L2.

As shown in FIGs. 13, 14A and 14B, the wireless power supply apparatus of the embodiments includes at least one coil L1, L2, and selectively or simultaneously supplies current to the at least one coil.

In this specification, it is described for simplicity that two coils and three amplification units are provided. It should be noted, however, that the number of coils, amplification units, and other components are not limited to two or three as described above and does not limit the scope of the present disclosure, and the user may reduce or increase the number of components of an embodiment to achieve the purpose of the embodiment.

It is apparent to those skilled in the art that the present disclosure may be embodied in specific forms other than those set forth herein without departing from the spirit and essential characteristics of the present disclosure. Therefore, the above embodiments should be construed in all aspects as illustrative and not restrictive. The scope of the disclosure should be determined by the appended claims and their legal equivalents, and all changes coming within the meaning and equivalency range of the appended claims are intended to be embraced therein.

### [Industrial Applicability]

The present disclosure is applicable to a wireless power transmission apparatus having a plurality of transmission coils.

## Claims

1. A wireless power supply apparatus comprising:
n transmission coils for transmission of a magnetic field;
a frequency generator configured to supply an AC signal having a predetermined operating frequency;
n inverter buffers configured to shift a phase of the AC signal;
a main controller configured to enable or disable the inverter buffers;
n+1 amplification units configured to amplify the AC signal; and
n+1 gate drivers configured to control the amplification units based on the phase of the AC signal input thereto.

2. The wireless power supply apparatus according to claim 1, wherein the amplification units comprise at least one metal oxide semiconductor field effect transistor (MOSFET).

3. The wireless power supply apparatus according to claim 1, wherein a current flowing across the transmission coils is inverted with a periodicity of T/2 period when a periodicity of the AC signal is T.

4. The wireless power supply apparatus according to claim 1, wherein one end of each of the gate drivers is electrically connected to the inverter buffers, and the other end of each of the gate drivers is electrically connected to the amplification units.

5. The wireless power supply apparatus according to claim 1, wherein n-2 amplification units among the n amplification units are electrically connected to the two or more of the transmission coils different from each other.

6. The wireless power supply apparatus according to claim 1, wherein two of the n amplification units are electrically connected to only one of the transmission coils.

7. A wireless power supply apparatus comprising:
a plurality of transmission coils for transmission of a magnetic field;
a frequency generator configured to supply an AC signal having a predetermined operating frequency;
a plurality of inverter buffers configured to shift a phase of the AC signal;
a main controller configured to enable or disable the inverter buffers;
a plurality of amplification units configured to amplify the AC signal; and
a plurality of gate drivers configured to control the amplification units based on the phase of the AC signal input thereto,
wherein at least one of the amplification units is electrically connected to the plurality of transmission coils.

8. The wireless power supply apparatus according to claim 7, wherein the transmission coils comprise first and second transmission coils,
wherein the amplification units comprise first to third amplification units,
wherein one end of the first transmission coil and one end of the second transmission coil are electrically connected to the second current amplification unit.

9. The wireless power supply apparatus according to claim 8, wherein one end of the first transmission coil is electrically connected to the first current amplification unit and the other end of the first transmission coil is electrically connected to the second current amplification unit,
wherein one end of the second transmission coil is electrically connected to the second current amplification unit and the other end of the second transmission coil is electrically connected to the third current amplification unit.

10. The wireless power supply apparatus according to claim 9, wherein the amplification units comprise at least one metal oxide semiconductor field effect transistor (MOSFET).

11. The wireless power supply apparatus according to claim 7, wherein the number of the gate drivers is equal to the number of the current amplification units.

12. The wireless power supply apparatus according to claim 10, wherein the gate drivers comprise first to third gate drivers,
wherein one end of the first gate driver is electrically connected to the first inverter buffer and the other end of the first gate driver is electrically connected to the first current amplification unit,
wherein one end of the second gate driver is electrically connected to a current supply and the other end of the second gate driver is electrically connected to the second current amplification unit,
wherein one end of the third gate driver is electrically connected to the second inverter buffer and the other end of the third gate driver is electrically connected to the third current amplification unit.

13. A wireless power supply apparatus comprising:
first to third transmission coils for transmission of a magnetic field;
a frequency generator configured to supply an AC signal having a predetermined operating frequency;
first to third inverter buffers configured to shift a phase of the AC signal;
a main controller configured to enable or disable the inverter buffers;
first to fourth amplification units configured to amplify the AC signal; and
first to fourth gate drivers configured to control the amplification units based on the phase of the AC signal input thereto,
wherein at least one of the amplification units is electrically connected to the transmission coils.

14. The wireless power supply apparatus according to claim 13, wherein one end of the n-th transmission coil is electrically connected to the n-th amplification unit,
wherein the other end of the n-th transmission coil is electrically connected to the (n+1)-th amplification unit.

15. The wireless power supply apparatus according to claim 14, wherein the n-th amplification unit is electrically connected to the n-th gate driver,
wherein one end of the n-th inverter buffer is electrically connected to the n-th gate driver,
wherein the other end of the n-th inverter buffer is electrically connected to the (n+1)-th gate driver.
